# FASCICULE DE BREVET EUROPEEN

(11) **EP 3 555 144 B1**
(45) Date de publication et mention de la délivrance du brevet: **21.06.2023**
(21) Numéro de dépôt: 17822392.1
(22) Date de dépôt: 08.12.2017
(51) Int. Cl.: C08C 19/25, C08C 19/44, C08F 36/00, C08F 4/48, C08J 3/24, C08L 19/00, B60C 1/00, C08F 136/06, C07F 7/08, C07F 7/14, C07C 15/28

(54) **PROCÉDÉ DE SYNTHÈSE DE POLYMÈRES DIÉNIQUES MODIFIÉS PAR DES GROUPEMENTS DÉRIVÉS DE L'ANTHRACÈNE, PRODUIT ISSU DE CE PROCÉDÉ ET COMPOSITION LE CONTENANT**
VERFAHREN ZUR SYNTHESE VON DIENPOLYMEREN, MODIFIZIERT MIT VON ANTHRACEN ABGELEITETEN GRUPPEN, PRODUKT AUS DIESEM VERFAHREN UND ZUSAMMENSETZUNG DAMIT
METHOD FOR SYNTHESIS OF MODIFIED DIENE POLYMERS BY GROUPS DERIVED FROM ANTHRACEN, PRODUCT OBTAINED FROM SAID METHOD AND COMPOSITION CONTAINING SAME

(30) Priorité: 15.12.2016 FR 1662484
(43) Date de publication de la demande: 23.10.2019
(73) Titulaire: Compagnie Générale des Etablissements Michelin, 63000 Clermont-Ferrand (FR)
(72) Inventeur: SCHNELL, Benoît, 63040 Clermont-ferrand Cedex 9 (FR); MATMOUR, Rachid, 63040 Clermont-ferrand Cedex 9 (FR)
(74) Mandataire: Le Cam, Véronique Marie Christine
(86) Numéro de dépôt international: PCT/FR2017/053473
(87) Numéro de publication internationale: WO 2018/109337

(56) Documents cités:
- EP-A1- 2 090 593
- EP-A2- 0 772 060
- WO-A1-2008/080553
- US-A- 5 654 368

## Description

La présente invention concerne la synthèse de polymères porteurs de groupements fonctionnels susceptibles de former des réseaux polymères thermoréversibles. Plus particulièrement, la présente invention concerne le procédé d'obtention de polymères modifiés par un ou plusieurs groupements dérivé d'un anthracène, susceptibles de réagir avec un diénophile par réaction de Diels-Alder. La présente invention concerne également de tels polymères et les compositions les contenant, ainsi que l'utilisation de tels polymères en réticulation pour l'obtention de réseaux de réticulation réversibles.

De nombreux produits sont fabriqués à partir de polymères diéniques qui, à la cuisson, sont réticulés entre eux. L'utilisation de polymères diéniques, notamment à base de butadiène, pour la fabrication de ces produits est souvent associée à une vulcanisation ou réticulation au moyen du soufre. Il se forme alors des liaisons covalentes très fortes entre les chaînes de polymères qui contribuent aux propriétés mécaniques du produit fini, notamment sa rigidité.

La force des liaisons covalentes qui se forme lors de la réticulation de polymères peut néanmoins induire des inconvénients lors de l'utilisation et du traitement ultérieur du produit fini. Ainsi, par exemple, l'énergie nécessaire pour briser ces liaisons peut constituer un frein à la récupération des chaînes polymères libres non réticulées dans un processus de recyclage plus global des matériaux constituant le produit fini.

C'est une des raisons qui poussent la recherche et le développement dans le domaine de la réticulation thermoréversible des polymères en vue d'élaborer des matériaux polymères recyclables, ouvrant en outre des perspectives d'utilisation innovante dans le domaine des produits finis du faits de propriétés auto-cicatrisantes ou auto-obturantes de ces matériaux polymères.

La littérature comporte de nombreuses références à la formation de réseaux réticulés thermoréversibles, qui sous l'effet de la température conduisent à des chaînes polymères non réticulées. Un moyen pour parvenir à des polymères réticulables de manière thermoréversible est la modification chimique des polymères afin de porter au sein de leurs chaînes des groupements qui interagissent entre eux de manière réversible.

L'utilisation du principe de réaction Diels-Alder pour créer des réseaux réticulés thermoréversibles est un des moyens le plus décrit. La réaction de Diels-Alder est une cycloaddition entre un composé diène et un composé diénophile. Le produit de cette réaction est un composé thermosensible qui par réaction de retro-Diels-Alder peut à nouveau régénérer les réactifs de départ.

La réaction de Diels-Alder a été employée dans le cadre de plusieurs systèmes pour préparer des matériaux réticulés aux propriétés d'auto-cicatrisation (Rheological and chemical analysis of reverse gelation in a covalently crosslinked Diels-Alder polymer network. Macromolecules 2008, 41, 9112-9117).

Wudl et al. a, par exemple, utilisé cette réaction pour développer un matériau aux propriétés mécaniques comparable aux résines époxydes commerciales, mais avec l'avantage de s'auto-cicatriser sous conditions douces (Synthesis and characterization of a single-component thermally remendable polymer network; Staudinger and Stille revisited. Macromolecules 2008, 41, 5203-5209). Cette résine auto-cicatrisante a été obtenue par réaction d'un tris-maleimide (diénophile) et d'un furane tétrafonctionnel à 75 °C.

D'autres groupes, tels que Barner-Kowollik et al., ont appliqué cette chimie à des chaînes polymères fonctionnalisés en bout de chaîne par des groupements diène conjugué. Les auteurs ont démontré la formation rapide et réversible d'un réseau par réaction de chaîne de poly(méthacrylate de méthyle) téléchélique cyclopentadiène avec un dérivé dithioester (pyridinyldithioformate) trifonctionnel (Rapid Bonding/Debonding on Demand: Reversibly Cross-Linked Functional Polymers via Diels-Alder Chemistry. Macromolecules 2010, 43 (13), pp 5515-5520)*.* Le cycle résultant de cette réaction d'hétéro-Diels-Alder entre le cyclopentadiène et le groupement dithioester est stable dans une gamme de température allant de 60 à 90 °C. Au-delà, la réaction de rétro-Diels-Alder prend place pour amener à la reformation quantitative des réactifs de départ.

De la même manière, Costanzo et al. en collaboration avec l'US Army Research Laboratory ont appliqué la réaction de Diels-Alder sur des polybutadiènes téléchéliques furane (Macromolecules 2010, 43, 6135 et US2010/0099798A1). Les auteurs ont utilisé des prépolymères de polybutadiène dihydroxy téléchélique pour les modifier en bout de chaîne en présence de dérivés isocyanate fonctionnel furane. Les polymères fonctionnels furane ont ainsi été réticulés par réaction de Diels-Alder à 60°C avec une réversibilité du système observée à 90°C. Les propriétés rhéologiques de ces réseaux de réticulation ont été étudiées par les auteurs.

Dans la perspective d'améliorer les capacités de recyclage des produits à base de plastique ou de caoutchouc, pour notamment limiter le gaspillage des ressources et l'accumulation des déchets, les concepteurs de matériaux polymères thermosensibles sont en permanence à la recherche de nouveaux polymères susceptibles de former des réseaux thermoréversibles dont la synthèse est simple, reproductible et adaptable à une production industrielle.

Plus particulièrement, les inventeurs se sont donnés pour mission de proposer un procédé de synthèse simple et reproductible, qui permet d'obtenir un polymère diénique portant un ou plusieurs groupements diènes conjugués au sein de sa chaîne permettant d'amener à la formation d'un réseau de réticulation thermoréversible.

Dans cette optique les inventeurs ont découvert un procédé de synthèse permettant l'obtention de polymères diéniques modifiés par des groupements dérivés d'un hydrocarbure aromatique polycyclique anthracényle par fonctionnalisation de chaînes polymères vivantes avec un composé organosilicié porteur d'au moins un groupement anthracényle et d'au moins un groupement réactif avec le bout de chaîne du polymère vivant.

L'invention a donc pour objet un procédé de préparation d'un polymère diénique modifié par au moins un groupement anthracényle susceptible de réagir avec un diénophile par réaction de Diels-Alder et porté par un atome de silicium situé dans le squelette du polymère.

L'invention a également pour objet un polymère diénique modifié par au moins un groupement anthracényle susceptible de réagir avec un diénophile par réaction de Diels-Alder porté par au moins un atome de silicium situé dans le squelette du polymère. Un autre objet de l'invention est un réseau de réticulation réversible par réaction du polymère diénique modifié par au moins un groupement anthracényle avec un diénophile polyfonctionnel ou poly-diénophile.

Un autre objet de l'invention est une composition de caoutchouc à base au moins du polymère diénique modifié par au moins un groupement anthracényle.

L'invention concerne aussi un produit fini dont un des éléments constitutifs comprend la composition de caoutchouc conforme à l'invention. A titre de produit fini on peut citer les tuyaux, les courroies, les pneumatiques, les semelles de chaussures, les articles chirurgicaux...

### I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Lorsqu'on désigne "de a à b", ceci comprend également l'intervalle représenté par l'expression "entre a et b".

Dans la présente description, on entend par " au moins un groupement " un ou plusieurs groupements. Dans la présente description, on entend par " au moins une fonction " une ou plusieurs fonctions.

Dans la présente description, l'expression "polymère diénique modifié par au moins un groupement anthracényle porté par un atome de silicium situé dans le squelette du polymère ", s'entend comme un polymère issu d'une polymérisation anionique et d'une fonctionnalisation du polymère vivant ainsi obtenu par réaction avec un agent de fonctionnalisation organosilicié possédant au moins un groupement anthracényle et au moins une fonction réactive vis-à-vis du polymère vivant. Il convient de noter qu'en fonction de la proportion de sites réactifs de l'agent de fonctionnalisation organosilicié par rapport au nombre de chaînes vivantes, on obtient des chaînes fonctionnalisées en extrémité de chaîne, couplées, étoilées et/ou non fonctionnalisées.

Lorsque l'atome de silicium portant au moins un groupement anthracényle se situe en bout de chaîne, on dira alors que le polymère diénique est fonctionnalisé en bout ou extrémité de chaîne.

Lorsque l'atome de silicium portant au moins un groupement anthracényle se situe dans la chaîne polymère principale linéaire à l'exclusion des extrémités, on dira alors que le polymère diénique est couplé ou encore fonctionnalisé en milieu de chaîne, par opposition à la position "en bout de chaîne" et bien que le groupement ne se situe pas précisément au milieu de la chaîne polymère. L'atome de silicium portant au moins un groupement anthracényle est alors substitué par deux chaînes ou branches polymères. Lorsque l'atome de silicium portant au moins un groupement anthracényle est central auquel trois chaînes ou branches polymères sont liées formant une structure en étoile du polymère, on dira alors que le polymère diénique est étoilé.

Dans la présente description, un ou plusieurs atomes de silicium portant au moins un groupement anthracényle, sont présents dans le squelette du polymère diénique modifié, que le polymère soit linéaire, ramifié, en étoile ou en réseau. Chaque atome de silicium est soit en extrémité de chaîne polymère ou lie deux ou trois chaînes polymère. Par squelette on entend plus particulièrement la structure que forment les unités monomères liées entre elles. Le squelette du polymère diénique modifié selon l'invention est donc interrompu par un ou plusieurs atomes de silicium portant chacun au moins un groupement anthracényle. L'atome de silicium n'est pas pendant au sens de la définition IUPAC.

Dans la présente description, l'expression "groupement anthracényle ", s'entend comme un groupement composé de trois cycles benzéniques fusionnés. Le groupement anthracényle, s'entend comme un groupement substitué ou non, c'est-à-dire que les cycles benzéniques constituant le groupement anthracényle peuvent être, de manière identique ou différente, substitués ou non.

Dans la présente description, l'expression "unité monomère", qu'il soit diène ou autre, s'entend comme une unité du polymère issue du monomère en question.

Il convient de noter que dans le cadre de l'invention, les monomères utilisés peuvent être d'origine fossile ou biosourcée. Dans ce dernier cas, ils peuvent être partiellement ou totalement issus de la biomasse ou obtenus à partir de matières premières renouvelables issues de la biomasse.

L'invention a donc pour objet un procédé de synthèse d'un polymère diénique modifié comprenant au moins un groupement anthracényle porté par un atome de silicium situé dans le squelette du polymère et susceptible de réagir avec un diénophile par réaction de Diels-Alder, comprenant les étapes de:
- polymérisation anionique d'au moins un monomère diénique en présence d'un initiateur de polymérisation anionique contenant un métal alcalin, et
- modification du polymère vivant obtenu à l'étape précédente par réaction avec un composé organosilicié porteur d'au moins un groupement anthracényle, substitué ou non, et d'au moins une fonction réactive vis-à-vis du bout de chaîne du polymère vivant.

Par polymère diénique, on entend tout type de polymère diénique au sens connu de l'homme de l'art, susceptible d'être obtenu par polymérisation anionique, notamment de nature thermoplastique ou élastomère.

Le polymère diénique est de préférence choisi dans le groupe constitué par les polymères thermoplastiques et les élastomères.

Par élastomère diénique, doit être compris de manière connue un élastomère issu au moins en partie (i.e., un homopolymère ou un copolymère) de monomères diènes, conjuguées ou non. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques. Ainsi, selon certaines variantes du procédé de l'invention, le monomère diène conjugué peut être homopolymérisé.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1 ,3-pentadiène et le 2,4-hexadiène. Préférentiellement, le monomère diène conjugué est le butadiène ou le 2-méthyl-1,3-butadiène (isoprène). Selon d'autres variantes du procédé de l'invention, le monomère diène conjugué peut être copolymérisé avec un ou plusieurs monomères diènes conjugués et/ou avec un ou plusieurs monomères vinylaromatiques ayant de 8 à 20 atomes de carbone.

A titre de composés vinylaromatiques utilisables dans le procédé conforme à l'invention conviennent notamment le styrène, l'ortho-, méta, para-méthylstyrène, l'alpha-méthylstyrène, le mélange commercial "vinyltoluène", le para-tertiobutylstyrène, les méthoxystyrènes, le vinylmésitylène, le divinylbenzène et le vinylnaphtalène.

Préférentiellement le monomère vinylaromatique est le styrène.

Le polymère diénique conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène ou d'isoprène et d'un monomère vinylaromatique, plus particulièrement le copolymère de butadiène-styrène (SBR), sont préférés.

Selon le procédé de l'invention, l'étape de polymérisation est une polymérisation anionique d'au moins un monomère diène en présence d'un initiateur de polymérisation anionique contenant un métal alcalin.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 150 °C et de préférence voisine de 30 °C à 110 °C.

En tant qu'initiateur de polymérisation, on peut utiliser tout initiateur anionique monofonctionnel ou polyfonctionnel connu contenant un métal alcalin tel que le lithium. Comme initiateurs organolithiens conviennent notamment ceux comportant au moins une liaison carbone-lithium ou au moins une liaison azote-lithium. Le nombre de liaisons carbone-lithium ou azote-lithium peut ainsi varier jusqu'à 12 liaisons.

Comme initiateurs organolithiens comportant une ou plusieurs liaisons carbone-lithium conviennent par exemple les organolithiens aliphatiques tels que l'éthyllithium, le n-butyllithium (n-BuLi), le s-butyllithium (s-BuLi), l'isobutyllithium, les polyméthylènes dilithium tels que le 1,4-dilithiobutane, le 1,4-dilithiotétraphénylbutane, les initiateurs dilithiés issus de la réaction d'un organolitien sur un composé divinyl aliphatique ou un composé divinyl aromatique, notamment la réaction de s-butyllithium sur les dialcénylbenzenes, tels que le 1,3-diisopropylbenzène ou le divinylbenzène tels que décrits dans le brevet EP1237941 B1. Parmi les organolithiens comportant plusieurs liaisons carbone-lithium, l'adduit de réaction entre le 1,3-diisopropénylbenzene et le s-butyl lithium est préféré.

Comme initiateurs organolithiens comportant une ou plusieurs liaisons azote-lithium conviennent par exemple les amidures de lithium issus de la réaction d'un organolithien sur une amine secondaire cyclique, telle que la pyrrolidine et l'hexaméthylèneimine, des amidures de dilithium issus de la réaction d'un organolithien sur un composé comprenant deux groupements azotés par exemple pyridinyle, tels que le 1,8-bis(6- ethyl-2-pyridyl)-octane dilithium issu de la réaction du 1,8-bis(6-ethyl-2-pyridyl)-octane avec le tert-butyllithium .

Selon une mise en oeuvre particulière du procédé de l'invention, on utilise comme initiateur de polymérisation, un initiateur organolithien polyfonctionnel, préférentiellement difonctionnel, notamment un initiateur comportant deux liaisons carbone-lithium tel que les polyméthylènes dilithium ou encore l'adduit de réaction du s-butyllithium sur les dialcénylbenzenes plus particulièrement le 1,3-diisopropénylbenzene dilithié. L'homme du métier saura déterminer les conditions de polymérisation en vue de la microstructure souhaitée du polymère diénique, notamment l'emploi ou non d'un agent modifiant et/ou randomisant et les quantités de ceux-ci. Ainsi, le polymère peut être à blocs, statistique, séquencé ou microséquencé.

La polymérisation anionique d'au moins un monomère diène en présence d'un initiateur de polymérisation génère des chaînes polymère possédant un site réactif en extrémité de chaîne que l'on peut représenter par une formule schématique : PLi, P représentant la chaîne polymère, et Li un atome de lithium. On parle alors communément de polymère vivant ou de chaîne vivante. Ces chaînes vivantes, ou polymères vivants, réagissent ensuite sur l'agent de fonctionnalisation.

La réaction de fonctionnalisation du polymère diénique vivant, obtenu à l'issue de cette étape de polymérisation, peut se dérouler à une température comprise entre -20°C et 100 °C, de préférence entre 40°C et 80°C, par addition de l'agent de fonctionnalisation sur les chaînes polymères vivantes ou inversement. Le temps de réaction varie généralement de 45 minutes à 5 heures et de préférence de 1 à 3 heures.

L'agent de fonctionnalisation conforme à l'invention est un composé organosilicié porteur d'au moins un groupement anthracényle et d'au moins une fonction réactive vis-à-vis du bout de chaîne du polymère vivant. Les groupements et fonctions portés par l'atome de silicium peuvent être directement liés à ce dernier par une liaison covalente ou par l'intermédiaire d'un groupement espaceur.

Par groupement espaceur, on entend selon l'invention un radical hydrocarboné divalent pouvant être interrompu ou substitué par un ou plusieurs hétéroatomes. Plus particulièrement ce radical hydrocarboné divalent peut être aliphatique, cyclique ou non, saturé ou non, linéaire ou ramifié, en C₁-C₁₈, ou encore aromatique en C₆-C₁₈. De préférence l'espaceur est un radical hydrocarboné divalent aliphatique en C₁-C₁₀, préférentiellement linéaire et saturé, plus préférentiellement encore le radical hydrocarboné linéaire en C₂ ou C₃.

Par fonction réactive vis-à-vis du bout de chaîne du polymère vivant portée par l'atome de silicium, on entend plus particulièrement selon l'invention un atome d'un halogène, de préférence un atome de chlore, ou encore une fonction alcoxy, le radical alkyle, substitué ou non substitué, étant un radical alkyle, linéaire ou ramifié, en C₁-C₁₀, voire en C₁-C₈, de préférence un radical alkyle en C₁-C₄, plus préférentiellement méthyle et éthyle.

Par groupement anthracényle on entend selon l'invention un dérivé d'un hydrocarbure composé de trois cycles benzéniques fusionnés. Tout particulièrement selon l'invention, l'hydrocarbure aromatique polycyclique dont est dérivé le groupement anthracényle porté par l'atome de silicium du composé organosilicié est l'anthracène, qu'il soit ou non substitué.

On entend par groupement anthracényle selon l'invention, un groupement de formule (I) ou (II) dans lesquelles le symbole * représente un rattachement à l'atome de silicium par l'intermédiaire ou non d'un espaceur.

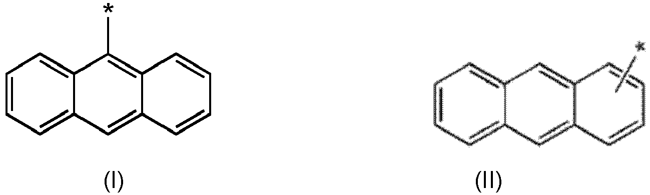

Le motif anthracényle peut être relié directement ou par l'intermédiaire d'un espaceur à l'atome de silicium, l'espaceur étant tel que défini plus haut.

Parmi les atomes de carbone constituant les trois cycles benzéniques fusionnés du groupe anthracényle, l'un constitue le point de rattachement avec l'atome de silicium directement ou par l'intermédiaire de l'espaceur, les autres atomes de carbone peuvent être substitués, notamment par un ou plusieurs groupements, identiques ou différents, hydrocarbonés monovalents pouvant être interrompus ou substitués par un ou plusieurs hétéroatomes. Plus particulièrement ces radicaux hydrocarbonés peuvent être aliphatiques, cycliques ou non, saturés ou non, linéaires ou ramifiés, en C₁-C₁₈, ou encore aromatique en C₆-C₁₈.

Selon un mode de réalisation de l'invention, l'atome de carbone du groupe anthracényle relié directement ou indirectement à l'atome de silicium est un des deux atomes de carbone du cycle benzénique central du groupe anthracényle. Le cycle benzénique central du groupe anthracényle est le cycle benzénique dont quatre des atomes de carbone sont liés aux atomes de carbone des deux autres cycles benzéniques du groupe anthracényle. En appliquant la numérotation adoptée par l'IUPAC pour désigner les atomes de carbone constitutifs d'une molécule d'anthracène, on considère dans la présente demande que l'un des deux atomes qui appartient au cycle benzénique central et qui n'a pas de liaison covalente avec les atomes de carbone des deux autres cycles du groupe anthracényle est l'atome de carbone numéroté 9 du groupe anthracényle, que le groupe anthracényle soit substitué ou non par ailleurs. La représentation suivante d'une molécule d'anthracène illustre la position de l'atome de carbone 9.

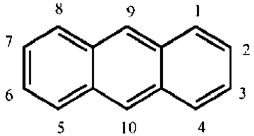

Selon ce mode de réalisation particulier et la convention adoptée pour la numérotation des atomes, le rattachement de l'espaceur ou de l'atome de silicium sur le motif anthracényle se fait sur l'atome de carbone numéroté 9. Selon ce mode de réalisation particulier de l'invention, le deuxième atome de carbone appartenant au cycle benzénique central du groupe anthracényle peut être substitué ou ne pas être substitué. Cet atome de carbone, selon la convention adoptée pour la numérotation est l'atome de carbone numéroté 10.

Selon des variantes particulières de l'invention, l'agent de fonctionnalisation organosilicié peut être représenté par l'une des formules (III) et (IV) suivantes: 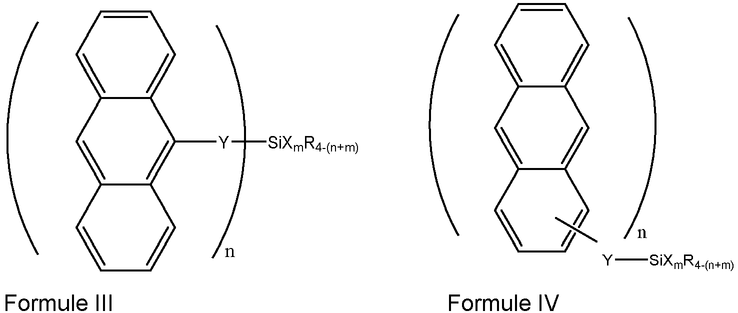 dans lesquelles :
- X désigne une fonction réactive vis-à-vis du bout de chaîne du polymère vivant telle que définie plus haut, notamment un atome d'halogène ou un radical alcoxy;
- Y représente un groupement espaceur, soit une chaine hydrocarbonée divalente pouvant être substituée ou interrompue par un ou plusieurs hétéroatomes telle que définie plus haut ;
- R représente un radical hydrocarboné monovalent pouvant être substitué ou interrompu par un ou plusieurs hétéroatomes, de préférence un radical alkyle, substitué ou non substitué, en C₁-C₁₀, voire en C₁-C₈, de préférence un radical alkyle en C₁-C₄, plus préférentiellement méthyle ou éthyle.
- n est un entier allant de 1 à 3 et m est un entier allant de 1 à 3, avec (n+m) est un entier allant de 2 à 4.

A titre préférentiel selon ces variantes particulières de l'invention, le composé organosilicié porte à titre de fonction réactive vis-à-vis du bout de chaîne du polymère vivant, au moins une fonction alcoxy, le radical alkyle étant en C₁-C₅, préférentiellement en C₁-C₂.

A titre préférentiel selon ces variantes particulières de l'invention, le composé organosilicié porte à titre de fonction réactive vis-à-vis du bout de chaîne du polymère vivant, au moins une fonction halogène, plus particulièrement CI.

A titre préférentiel selon ces variantes particulières de l'invention, le groupement espaceur reliant le groupement anthracényle à l'atome de silicium est de préférence un groupe éthane-1,2-diyle ou propane-1,3-diyle.

A titre préférentiel selon ces variantes particulières de l'invention, dans les formules (III) et (IV) n vaut de préférence 1.

A titre préférentiel selon ces variantes particulières de l'invention, dans les formules (III) et (IV) m vaut de préférence 1.

Selon ces variantes particulières de l'invention, le composé organosilicié est de préférence représenté par la formule (III).

Les aspects préférentiels des variantes de l'invention décrites ci-dessus sont combinables entre eux. Ainsi, à titre très avantageux, l'une au moins des conditions suivantes est remplies, deux au moins, trois au moins, voire au moins quatre et de préférence les cinq :
- le composé organosilicié répond à la formule (III) ou (IV), de préférence (III),
- X est un halogène, de préférence un atome de chlore,
- Y est un groupe éthane-1,2-diyle ou propane-1,3-diyle,
- n et m valent chacun 1 et
- R est un radical méthyle ou éthyle.

A titre de composé organosilicié conforme à l'invention on peut citer tout particulièrement le composé de formule (V).

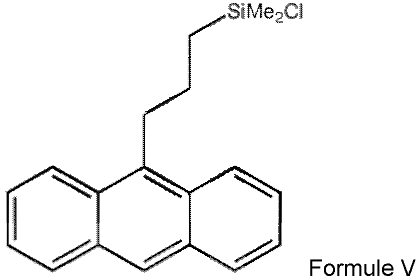

L'homme du métier comprendra que le rapport molaire de l'agent de fonctionnalisation, c'est-à-dire du composé organosilicié, au métal de l'initiateur de polymérisation dépend essentiellement du type de polymère diénique modifié souhaité, de la polyfonctionnalité ou non de l'initiateur de polymérisation, du nombre de fonctions du composé organosilicié réactives vis-à-vis du polymère vivant. La détermination de ce rapport est de la compétence de l'homme du métier en fonction du polymère diénique souhaité. Selon certaines variantes de l'invention, le rapport molaire des fonctions du composé organosilicié réactives vis-à-vis des chaines polymères vivantes, au métal de l'initiateur de polymérisation est supérieur à 1.

Selon une mise en oeuvre particulièrement de l'invention, l'initiateur de polymérisation est bi-fonctionnel et le composé organosilicié comporte une seule fonction réactive vis-à-vis du polymère vivant. A titre préférentiel selon cette mise en oeuvre, le rapport molaire du composé organosilicié au métal de l'initiateur de polymérisation est supérieur ou égal à 0,75 voire supérieur à 1, plus préférentiellement supérieur à 1,3. Ainsi, on forme majoritairement des espèces fonctionnalisées en bout de chaîne et plus particulièrement on peut former des polymères diéniques modifiés linéaires comportant à chacune de ses deux extrémités de chaîne un groupement anthracényle, substitué ou non.

Les composés halosilanes, composé organosilicié dans lequel la fonction réactive vis-à-vis du polymère vivant est un halogène, peuvent être préparés par exemple par hydrosilylation d'un précurseur contenant un groupe anthracényle substitué par un groupe hydrocarboné insaturé, par un hydrogénosilane porteur d'un halogène. A titre de précurseurs on peut citer le 1-vinylanthracène, le 1-allylanthracène, le 2-vinylanthracène, le 2-allylanthracène, le 9-vinylanthracène, le 9-allylanthracène. A titre d' hydrogénosilane, on peut citer le diméthylchlorosilane. Les conditions de réaction d'hydrosilylation sont connues de l'homme du métier.

Les composés alcoxysilanes, composé organosilicié dans lequel la fonction réactive vis-à-vis du polymère vivant est une fonction alcoxy, peuvent être préparés par exemple par hydrosilylation d'un précurseur contenant un groupe anthracényle substitué par un groupe hydrocarboné insaturé, par un hydrogénosilane porteur d'un groupement alcoxysilane. On peut citer à titre de précurseurs le 1-vinylanthracène, le 1-allylanthracène, le 2-vinylanthracène, le 2-allylanthracène, le 9-vinylanthracène, le 9-allylanthracène. A titre d' hydrogénosilane, on peut citer les trialcoxysilanes, les dialcoxyalkylsilanes. Les conditions de réaction d'hydrosilylation sont connues de l'homme du métier.

Le procédé de synthèse du polymère diénique modifié selon l'invention peut se poursuivre de manière connue en soi par les étapes de récupération de l'élastomère modifié. Selon des variantes de ce procédé, ces étapes peuvent comprendre une étape de stripping en vue de récupérer le polymère issu des étapes antérieures sous forme sèche. Cette étape de stripping peut avoir pour effet d'hydrolyser tout ou partie des fonctions résiduelles réactives vis-à-vis du polymère vivant pour les transformer en fonctions hydroxyles.

Le polymère diénique modifié préparé selon le procédé de synthèse défini plus haut est également un objet de l'invention.

L'invention a également pour objet un polymère diénique modifié comprenant dans son squelette au moins un atome de silicium portant au moins un groupement anthracényle, substitué ou non, l'atome de silicium étant substitué par une, deux ou trois chaînes polymère.

Le groupement anthracényle est tel que décrit plus haut et est lié de préférence à l'atome de silicium par l'intermédiaire d'un groupement espaceur tel que décrit plus haut.

Selon des variantes de l'invention, l'atome de silicium est également substitué par un radical hydrocarboné monovalent pouvant être substituée ou interrompue par un ou plusieurs hétéroatomes, de préférence un radical alkyle, substitué ou non substitué, en C₁-C₁₀, voire en C₁-C₈, de préférence un radical alkyle en C₁-C₄, plus préférentiellement méthyle ou éthyle.

Selon d'autres variantes, compatibles avec les précédentes, l'atome de silicium est substitué par des fonctions résiduelles réactives vis-à-vis des chaînes vivantes de polymère, éventuellement totalement ou partiellement hydrolysées en fonction hydroxyle.

Le polymère diénique est tel que défini plus haut, choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène ou d'isoprène et d'un monomère vinylaromatique, plus particulièrement le copolymère de butadiène-styrène (SBR), sont préférés.

Selon une variante de l'invention, le polymère est linéaire et comprend à au moins une extrémité de chaîne un atome de silicium portant au moins un groupement anthracényle, substitué ou non.

Selon cette variante et à titre avantageux, le polymère diénique modifié est linéaire et comprend à chacune de ses deux extrémités de chaîne un atome de silicium portant au moins un groupement anthracényle, substitué ou non.

A titre préférentiel selon cette variante et sa déclinaison avantageuse, l'atome de silicium porte un seul groupement anthracényle non substitué.

Selon des variantes particulières de l'invention, le polymère diénique modifié peut être représenté par la formule (VI) suivante :

[(B-Y')ₙSi(X)ₚ(R)₄₋ₚ₋ₙ₋ₒ(E)ₒ]ᵢ-Z Formule VI

où
- E désigne le polymère diénique tel que défini plus haut,
- Z est un radical mono ou polyvalent qui est issu de l'initiateur,
- i est un nombre entier égale à la fonctionnalité de l'initiateur, de préférence une valeur allant de 1 à 12, de préférence de 1 à 4, plus préférentiellement 1 ou 2, plus préférentiellement encore 2,
- Y' est une liaison covalente ou un groupement espaceur reliant B au polymère diénique E, le groupement espaceur étant tel que défini plus haut,
- X est une fonction résiduelle, hydrolysée partiellement, totalement ou non hydrolysée, désignant un halogène ou un radical alcoxy telle que définie plus haut,
- R est un groupement hydrocarboné monovalent pouvant être substitué ou interrompu par un ou plusieurs hétéroatomes tel que défini plus haut
- B est un groupement anthracényle de formule (I) ou (II) dans lesquelles le symbole * représente un rattachement à Y'. 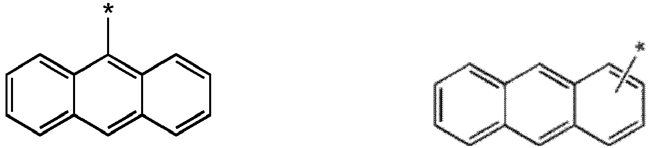 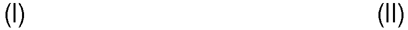
- n est un entier allant de 1 à 3, o est un entier allant de 1 à 3, p est un entier allant de 0 à 2, avec n+o+p allant de 2 à 4.

Selon un mode de réalisation de l'invention, le polymère diénique modifié peut être représenté par la formule (VII) dans laquelle :
- E désigne le polymère diénique tel que défini plus haut, et
- R₁ est un groupement hydrocarboné monovalent pouvant être substitué ou interrompu par un ou plusieurs hétéroatomes tel que défini plus bas.

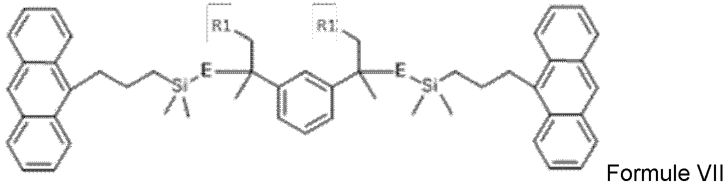

L'homme du métier comprendra aisément à la lecture de la formule (VI) ci-dessus qu'il existe, selon la valence de Z, au moins un et au plus douze groupe(s) [(B-Y)ₙSi(X)ₚ(R)₄₋ₚ₋ₙ₋ₒ(E)ₒ], identiques ou différents.

En fonction de la nature de l'initiateur, Z peut avoir différentes significations et peut notamment contenir un ou plusieurs atomes d'azote. A titre d'exemple, et pour illustrer des valences de 1 et de 2, Z peut être représenté par les formules (VIII) et (IX) suivante : 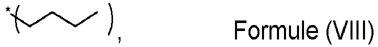 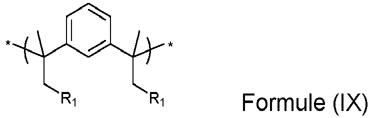 dans lesquelles
* représente le rattachement au polymère, et
R1 est un groupement hydrocarboné, notamment alkyle, linéaire ou ramifié, en C₁-C₈

Selon des modes de réalisation préférés de l'invention, l'une au moins des conditions suivantes est remplies, notamment au moins deux, voire au moins trois, au moins quatre, et de préférence toutes :
- les unités monomères diènes du polymère diénique modifié sont issues du 1,3-butadiène,
- le polymère diénique modifié est linéaire,
- le polymère diénique comporte à chacune de ses extrémités de chaîne un atome de silicium portant un groupement anthracényle, substitué ou non,
- le ou les groupements anthracényles sont reliés à la chaîne polymère par l'atome de carbone noté 9 selon la notation IUPAC,
- le groupement anthracényle est relié à l'atome de silicium par un groupe éthane-1,2-diyle ou propane-1,3-diyle.

Les polymères porteurs de groupements anthracényle selon l'invention, peuvent être utilisés en tant que tel ou en mélanges avec un ou plusieurs autres composés. La présence de groupements anthracényle permet d'envisager une utilisation pour la réalisation de réseaux polymères thermoréversibles. Etant donné l'intérêt de ce type de réseaux polymères dans de nombreux domaines notamment pour leurs capacités auto-réparatrices ou auto-obturantes et leur capacité à être recyclés, l'utilisation des polymères diéniques fonctionnels aromatiques polycycliques et notamment anthracényle selon l'invention peut être envisagée dans les domaines de la caoutchouterie où ces caractéristiques sont recherchées. On peut notamment citer la fabrication de divers produits finis à base de caoutchouc tels que les tuyaux, les courroies, les pneumatiques, les semelles de chaussures, les articles chirurgicaux...

L'invention a également pour objet un réseau issu de la réticulation thermoréversible d'un polymère diénique modifié par au moins un groupement anthracényle selon l'invention avec un agent de réticulation diénophile compatible. Parmi ces agents de réticulation diénophile, on peut citer les agents polyfonctionnels ayant au moins deux fonctions diénophiles et de préférence au moins trois fonctions diénophiles. Ces agent poly-diénophiles sont plus particulièrement selon l'invention des poly-maléimides, c'est-à-dire, des agents de réticulation comprenant au moins deux groupements maléimides, substitués ou non, de préférence ceux comprenant au moins trois groupements maléimides, substitués ou non. Parmi ceux-ci, on peut citer par exemple les bis-maléimides, les bis-citraconimides, les tris-maléimides.

Un autre objet de l'invention est une composition de caoutchouc à base d'un polymère diénique modifié portant au moins un groupement anthracényle conforme à l'invention et d'un système de réticulation comprenant un diénophile polyfonctionnel ou poly-diénophile.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

Selon des variantes de l'invention, la composition peut, outre le polymère conforme à l'invention, comprendre au moins une charge renforçante.

On entend par charge renforçante selon l'invention par exemple du noir de carbone, une charge renforçante autre que du noir de carbone, notamment de type siliceux telle que de la silice à laquelle est associé de manière connue un agent de couplage, ou encore un mélange de ces deux types de charge.

Selon des variantes de l'invention, la composition peut, outre le polymère conforme à l'invention, comprendre au moins un autre élastomère diénique.

On entend par autre élastomère diénique selon l'invention, le caoutchouc naturel, les polybutadiènes (BR), les copolymères de butadiène, les polyisoprènes (IR), les copolymères d'éthylène-butadiène, les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'éthylène-butadiène, les copolymères d'isoprène et d'un monomère vinylaromatique.

Les compositions de caoutchouc conformes à l'invention peuvent comporter également tout ou partie des additifs usuels habituellement utilisés en fonction des domaines d'application de la composition, comme par exemple des pigments, des agents de protection, des agents anti-fatigue, des plastifiants, des résines renforçantes, des donneurs de méthylène (par exemple HMT ou H3M), un système de réticulation et les mélanges de tels composés.

Le système de réticulation comprend un poly-diénohile. L'utilisation conjointe d'un poly-diénophile et du polymère diénique modifié conforme à l'invention, notamment préparé par le procédé conforme à l'invention mis en oeuvre sous l'un quelconque de ses modes de réalisation décrits, permet l'obtention d'une composition de caoutchouc réticulée avec des propriétés comparables à une composition de caoutchouc vulcanisée avec néanmoins des propriétés de recyclabilité et d'auto-obturation propres aux réseaux polymères thermosensibles.

Par poly-diénophiles selon l'invention, on entend un composé comportant au moins deux groupements diénophiles, de préférence au moins trois fonctions diénophiles compatibles avec les fonctions diènes du polymère diénique modifié. Le préfixe « poly » n'est pas utilisé ici pour désigner un polymère. Ces agent poly-diénophiles sont plus particulièrement selon l'invention des poly-maléimides, c'est-à-dire, des agents de réticulation comprenant au moins deux groupements maléimides, substitués ou non, de préférence ceux comprenant au moins trois groupements maléimides, substitués ou non. Parmi les agents comprenant deux groupements maléimides, substitués ou non, on peut citer par exemple les bis-maléimides, les bis-citraconimides. Toutefois, à titre de poly-diénophiles préférentiels, utiles aux besoins de l'invention, on citera particulièrement ceux comportant au moins trois groupements diénophiles, notamment ceux comportant au moins trois groupements maléimides, substitué ou non, tels que les tris-maléimides, en vue de former des réseaux avec des polymères diéniques modifiés par deux groupements diéniques selon l'invention et pas seulement des allongements de chaînes obtenus avec les agents de réticulation ayant deux groupement diénophile.

La fabrication des compositions de caoutchouc conformes à l'invention est bien connue de l'homme du métier. Les composés mentionnés ci-dessus et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse.

Un autre objet de l'invention est un produit fini comprenant dans un de ses éléments constitutifs une composition de caoutchouc à base d'au moins un polymère diénique modifié portant au moins un groupement anthracényle conforme à l'invention. Plus particulièrement, la composition de caoutchouc est telle que décrite plus haut selon l'une quelconque de ses variantes.

Le produit fini à base de caoutchouc peut être un tuyau, une courroie, un pneumatique, une semelle de chaussures, un article chirurgical...

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II. 1 Synthèse du composé destiné à fonctionnaliser les bouts de chaîne :

Le composé destiné à fonctionnaliser les bouts de chaîne polymère, l'halosilane, est synthétisé selon le schéma 1.

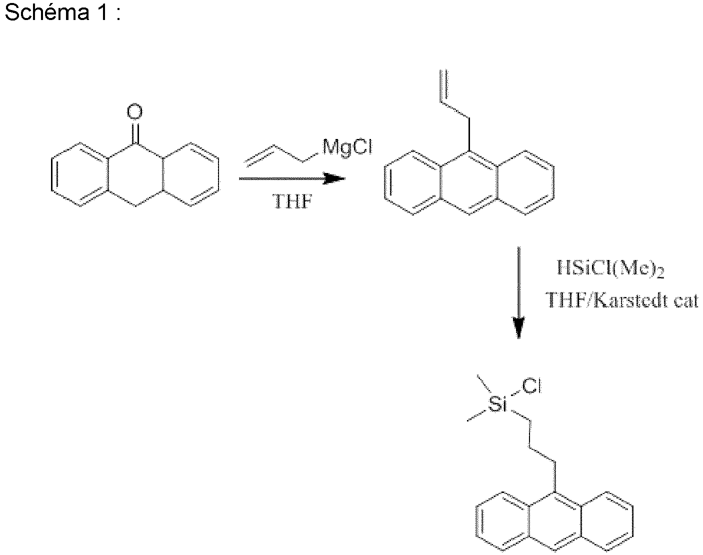

Etape 1 :_Synthèse de 9-allylanthracène, CAS [23707-65-5], décrit par Karama, Usama et al, Journal of Chemical Research, 34(5), 241-242; 2010 ; Mosnaim,D. et al., Tetrahedron, 1969, vol. 25, p. 3485 - 3492. 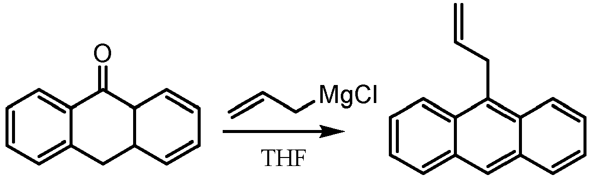 À une solution de chlorure d'allylmagnésium (235 ml, 0,467 mol, 2,0 M dans le THF, Aldrich) est ajoutée, sous argon, goutte à goutte, une solution d'anthrone (30,25 g, 0,155 mol) dans le THF anhydre (300 ml). Le milieu réactionnel est chauffé au reflux pendant 2 heures. Après refroidissement à 0 °C, une solution d'HCl (100 ml, 37 % solution) dans l'eau (170 ml) est ajoutée goutte à goutte. Le milieu réactionnel est agité vigoureusement pendant 1 heure. Après retour à température ambiante, la phase organique est extraite par du tert-butyl-méthyléther (t-BuOMe, 3 fois 100 ml), lavée par une solution de K₂CO₃, lavée par de l'eau et séchée par Na₂SO₄. Les phases organiques réunies sont concentrées sous pression réduite pour fournir une huile orange. Après purification sur colonne chromatographique (Al₂O₃ / éther de pétrole) une huile est obtenue. Le produit cristallise à +4°C

Un solide vert (30,45 g, rendement 90 %) de point de fusion 45 °C est obtenu.

La pureté molaire est supérieure à 93 % (RMN ¹H).

### Etape 2 :_Synthèse du (3-(anthracèn-9-yl)propyl)chlorodiméthylsilane CAS [150147-39-0]

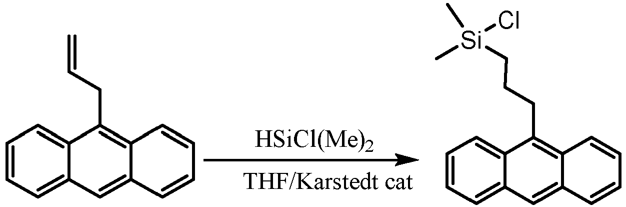

À une solution de 9-allylanthracène (15,49 g, 0,071 mol) dans le THF anhydre (100 ml), est ajouté le catalyseur de Karstedt (50 mg, solution à 2,4% de Pt dans le xylène). Une solution de diméthylchlorosilane (13,43 g, 0,142 mol, [1066-35-9], Aldrich) dans le THF anhydre (30 ml) est ensuite ajoutée goutte à goutte. Le milieu réactionnel est agité pendant 15 min puis chauffé à I 60 - 65 °C pendant 5 - 6 heures. Le mélange est alors refroidi à 20 °C et est concentré sous pression réduite pour conduire à une huile.

Après cristallisation dans le pentane (300 ml), un solide jaune (17,85 g, rendement 80 %) de point de fusion 81 °C est obtenu.

La pureté molaire est supérieure à 97 % (RMN ¹H - ²⁹Si).

### Caractérisation par spectroscopie de résonance magnétique nucléaire (RMN)

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde " large bande " BBFO-zgrad 5 mm. L'expérience RMN 1H quantitative, utilise une séquence simple impulsion 30° et un délai de répétition de 3 secondes entre chacune des 64 acquisitions. Les échantillons sont solubilisés dans le chloroforme deutéré, sauf indication contraire. Ce solvant est également utilisé pour le signal de lock, sauf indication contraire.

Le spectre RMN 1H couplé aux expériences 2D HSQC 1H/13C et HMBC 1H/13C permettent la détermination structurale des molécules (cf. tableaux d'attributions). Les quantifications molaires sont réalisées à partir du spectre RMN 1D 1H quantitatif.

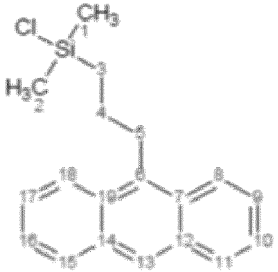

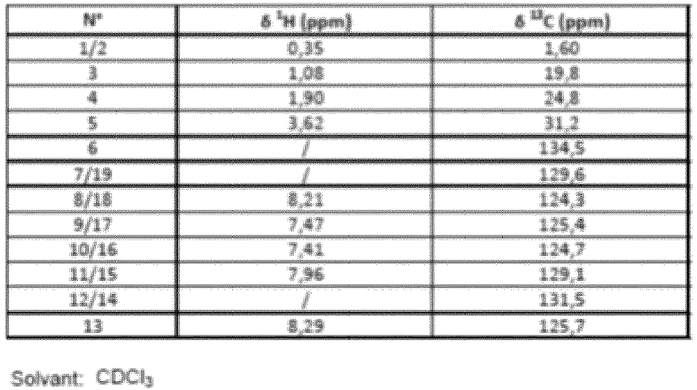

### Il. 2 Synthèse de polymères fonctionnels anthracène :

### Caractérisation par spectroscopie de résonance magnétique nucléaire (RMN)

La détermination du taux de motif anthracényle sur le polymère est réalisée par analyse RMN. Les spectres sont acquis sur un spectromètre 500 MHz BRUKER équipé d'une sonde « large bande » BBIz-grad 5 mm. L'expérience RMN 1H quantitative, utilise une séquence simple impulsion 30° et un délai de répétition de 3 secondes entre chaque acquisition. Les échantillons sont solubilisés dans le solvant deuteré C₆D₁₂. Le spectre RMN ¹H permet de quantifier le taux de motifs anthracényle greffé sur le polymère par intégration des signaux caractéristiques des protons suivants :
5H Motif Styrène : 7.41ppm à 6.0ppm
1H PB1-2 +2H PB1-4 : 5.67ppm à 4.5ppm

Le calcul du taux de motif anthracényle greffé a été réalisé sur le spectre 1H en intégrant le signal à 3,45ppm correspondant à 2 protons du carbone numéroté 6 du motif anthracényle.

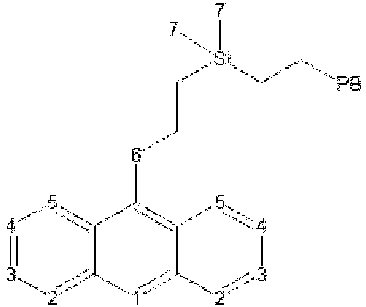

### • Attribution :

| δ ¹H (ppm) | δ ¹³C (ppm) | Attribution |
|---|---|---|
| 8.10 | 123.8 | H1 |
| 8.05 | 123.4 | H2 |
| 7.81 | 127.6 | H5 |
| 7.30 | 123.6 | H3 et H4 |
| 3.45 | 31.7 | H6 |
| -0.10 | -2.0 | H7 |

### Chromatographie d'exclusion stérique (SEC) :

La chromatographie d'exclusion stérique (ou Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Il n'y a pas de traitement particulier de l'échantillon de polymère avant analyse. Celui-ci est simplement solubilisé, dans une solution de tétrahydrofurane contenant 1 % en volume de diisopropylamine, 1 % en volume de triéthylamine et 1 % en volume d'eau distillée, ou dans du chloroforme, à une concentration d'environ 1 g/l. Puis, la solution est filtrée sur filtre de porosité 0,45 µm avant injection. L'appareillage utilisé est un chromatographe « WATERS alliance ». Le solvant d'élution est du tétrahydrofurane contenant 1 % en volume de diisopropylamine et 1 % en volume de triéthylamine, ou du chloroforme selon le solvant utilisé pour la mise en solution du polymère. Le débit est de 0,7 ml/min, la température du système est de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ». Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER ». Les masses molaires moyennes calculées sont relatives à une courbe d'étalonnage réalisée à partir de polystyrènes étalons commerciaux « PSS READY CAL-KIT ».

### Préparation des polymères A et A'

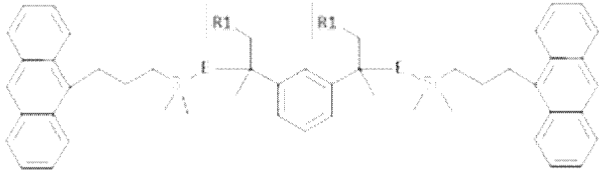

où E désigne le polymère diénique et plus particulièrement dans cet exemple un polybutadiène.

### A) Synthèse de l'initiateur diisopropenylbenzene dilithium (DIBdiLi) :

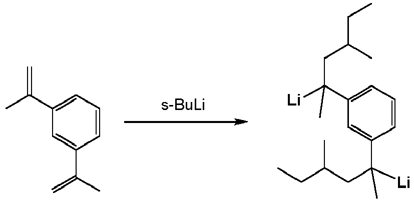

L'amorceur dilithié est synthétisé selon le mode opératoire suivant : A une solution de 315g de diisopropenylbenzène dans 4,3L de methylcyclohexane sont ajoutés 300mL de tétraméthyléthylènediamine (0,5 équivalent par Lithium) et 3,06L de s-BuLi (C = 1,313mol/L). Le milieu réactionnel est agité pendant 4h à 50 °C.

### B) Synthèse du polymère fonctionnel A :

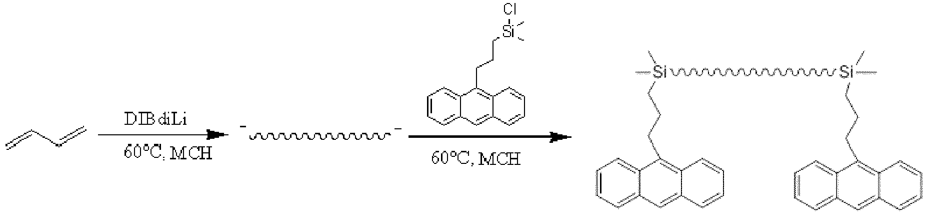

Dans 84,4 mL de méthylcyclohexane barboté, introduire 6,5 mmoles de tétraméthyléthylènediamine et 6,5g de butadiène. Après compensation des impuretés apportées par le solvant, la tétraméthyléthylènediamine et le monomère à l'aide de n-butyl lithium, introduire un volume d'initiateur dilithié correspondant à 3,25 mmol de liaisons carbone-lithium. La polymérisation s'effectue à 60°C, jusqu'à conversion totale du monomère (environ 40 minutes). 4,875 mmoles de chlorosilane anthracène sont additionnés sur le polymère vivant. La fonctionnalisation s'effectue à 60°C pendant 1h30. L'échantillon est protoné par addition de 2 mL de solution à 2 mol/L de méthanol dans le toluène. Le polymère est anti-oxydé par addition de 2,2'-methylène bis-4 méthyl-6 tertiobutylphénol (0,4 g pour 100 g de monomère). L'élastomère est ensuite séché à 60°C sous pression réduite. **Le polymère obtenu possède une masse molaire Mn = 5100 g/mol déterminée par SEC et un taux de fonction correspondant à 96% de chaîne terminé par le motif anthracényle.**

### C) Synthèse du polymère fonctionnel A' :

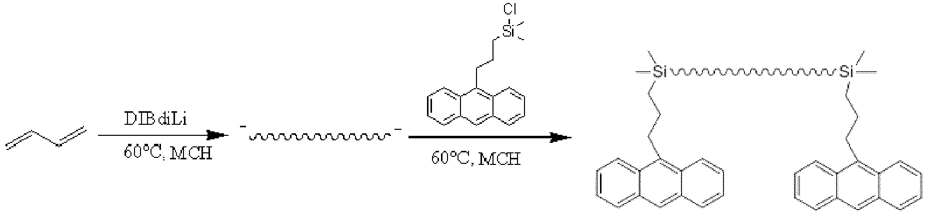

Dans 84,4 mL de méthylcyclohexane barboté, introduire 6,5g de butadiène. Après compensation des impuretés apportées par le solvant et le monomère à l'aide de n-butyl lithium, introduire un volume d'initiateur dilithié correspondant à 167 µmol de liaisons carbone-lithium. La polymérisation s'effectue à 60°C, après conversion totale du monomère (environ 40 minutes). 250,5 µmoles de chlorosilane anthracène sont additionnés sur le polymère vivant. La fonctionnalisation s'effectue à 60°C pendant 1h30. L'échantillon est protoné par addition de 2 mL de solution à 2 mol/L de méthanol dans le toluène. Le polymère est anti-oxydé par addition de 2,2'-methylène bis-4 méthyl-6 tertiobutylphénol (0,4 g pour 100 g de monomère). L'élastomère est ensuite séché à 60°C sous pression réduite. **Le polymère obtenu possède une masse molaire Mn = 76300 g/mol déterminée par SEC et un taux de fonction correspondant à 95% de chaîne terminé par le motif anthracényle.**

## Revendications

1. Procédé de synthèse d'un polymère diénique modifié comprenant au moins un groupement anthracényle porté par un atome de silicium situé dans le squelette du polymère et susceptible de réagir avec un diénophile par réaction de Diels-Alder, comprenant les étapes:
- polymérisation anionique d'au moins un monomère diénique en présence d'un initiateur de polymérisation contenant un métal alcalin,
- modification du polymère vivant obtenu à l'étape précédente par un composé organosilicié porteur d'au moins un groupement anthracényle, substitué ou non, et d'au moins une fonction réactive vis-à-vis du bout de chaîne du polymère vivant.

2. Procédé de synthèse d'un polymère diénique modifié selon la revendication 1 , **caractérisé en ce que** l'initiateur de polymérisation est difonctionnel.

3. Procédé de synthèse d'un polymère diénique modifié selon la revendication 1 ou 2, **caractérisé en ce que** le composé organosilicié est représenté par une des formules (III) ou (IV) suivantes : 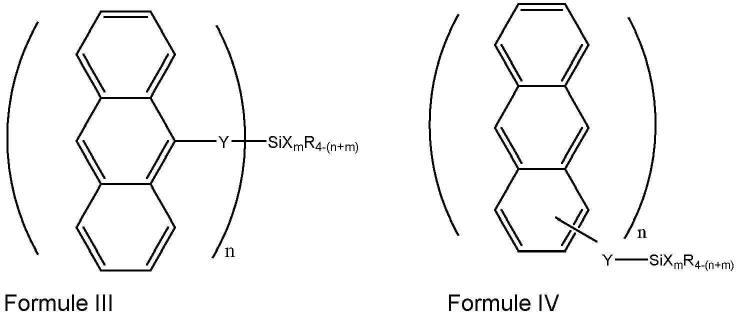 dans lesquelles :
- X désigne une fonction réactive vis-à-vis du bout de chaîne du polymère vivant;
- Y représente un groupement espaceur, soit une chaine hydrocarbonée divalente pouvant être substituée ou interrompue par un ou plusieurs hétéroatomes;
- R représente un radical hydrocarboné monovalent pouvant être substitué ou interrompu par un ou plusieurs hétéroatomes.
- n est un entier allant de 1 à 3 et m est un entier allant de 1 à 3, avec (n+m) est un entier allant de 2 à 4.

4. Procédé de synthèse d'un polymère diénique modifié selon la revendication 3, **caractérisé en ce que**, l'une au moins des conditions suivantes est remplies, deux au moins, trois au moins, au moins quatre ou les cinq :
- le composé organosilicié répond à la formule (III),
- X est un halogène, de préférence un atome de chlore,
- Y est un groupe éthane-1,2-diyle ou propane-1,3-diyle,
- n et m valent chacun 1 et
- R est un radical méthyle ou éthyle.

5. Procédé de synthèse d'un polymère diénique modifié selon l'une quelconque des revendications 1 à 4, **caractérisé en ce que** le rapport molaire du composé organosilicié au métal de l'initiateur de polymérisation a une valeur supérieure à 1.

6. Polymère diénique modifié comprenant dans son squelette au moins un atome de silicium portant au moins un groupement anthracényle, substitué ou non, l'atome de silicium étant substitué en outre par une, deux ou trois chaînes polymère.

7. Polymère diénique modifié selon la revendication 6, **caractérisé en ce que** le polymère est linéaire et comprend à chacune de ses deux extrémités de chaîne un atome de silicium portant au moins un groupement anthracényle, substitué ou non.

8. Polymère diénique modifié selon la revendication 6 ou 7, **caractérisé en ce que** le polymère diénique modifié peut être représenté par la formule (VI) suivante :
[(B-Y')ₙSi(X)ₚ(R)₄₋ₚ₋ₙ₋ₒ(E)ₒ]ᵢ-Z Formule VI
où
- E désigne un polymère diénique,
- Z est un radical mono ou polyvalent qui est issu de l'initiateur,
- i est un nombre entier égale à la fonctionnalité de l'initiateur allant de 1 à 12,
- Y' est une liaison covalente ou un groupement espaceur reliant B au polymère diénique E,
- X est une fonction résiduelle, hydrolysée partiellement, totalement ou non hydrolysée, désignant un halogène ou un radical alcoxy,
- R est un groupement hydrocarboné monovalent pouvant être substitué ou interrompu par un ou plusieurs hétéroatomes,
- B est un groupement anthracényle de formule (I) ou (II) dans lesquelles le symbole * représente un rattachement à Y'. 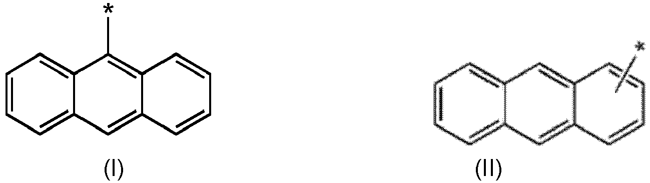
- n est un entier allant de 1 à 3, o est un entier allant de 1 à 3, p est un entier allant de 0 à 2, avec n+o+p allant de 2 à 4.

9. Polymère diénique modifié selon l'une quelconque des revendications 6 à 8, **caractérisé en ce que** l'une au moins des conditions suivantes est remplie, notamment au moins deux, au moins trois, au moins quatre ou toutes :
• les unités monomères diènes du polymère diénique modifié sont issues du 1,3-butadiène,
• le polymère diénique modifié est linéaire,
• le polymère diénique comporte à chacune de ses extrémités de chaîne un atome de silicium portant un groupement anthracényle, substitué ou non,
• le ou les groupements anthracényles sont reliés à la chaîne polymère par l'atome de carbone noté 9 selon la notation IUPAC,
• le groupement anthracényle est relié à l'atome de silicium par un groupe éthane-1,2-diyle ou propane-1,3-diyle.

10. Polymère diénique modifié selon l'une quelconque des revendications 6 à 9, **caractérisé en ce qu'**il est représenté par la formule (VII) dans laquelle :
- E désigne un polymère diénique, et
- R1 est un groupement hydrocarboné monovalent pouvant être substitué ou interrompu par un ou plusieurs hétéroatomes.

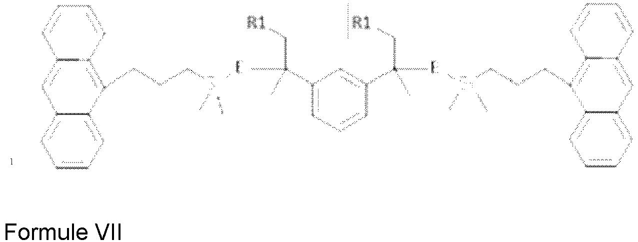

11. Réseau issu de la réticulation thermoréversible d'un polymère diénique modifié par au moins un groupement anthracényle tel que défini dans l'une quelconque des revendications 6 à 10 ou obtenu selon le procédé décrit dans l'une quelconque des revendications 1 à 5 avec un agent de réticulation diénophile polyfonctionnel.

12. Composition de caoutchouc à base d'un polymère diénique modifié défini dans les revendications 6 à 10 ou obtenu selon le procédé décrit dans l'une quelconque des revendications 1 à 5 et d'un système de réticulation comprenant un diénophile polyfonctionnel.

13. Composition de caoutchouc selon la revendication 12, **caractérisée en ce que** le composé diénophile polyfonctionnel est un poly-maléimide, substitué ou non.

14. Pneumatique comprenant une composition de caoutchouc définie selon l'une des revendications 12 et 13.

## Patentansprüche

1. Verfahren zur Synthese eines modifizierten Dienpolymers, das mindestens eine Anthracenylgruppe umfasst, die von einem Siliciumatom getragen wird, das sich im Polymerrückgrat befindet und in einer Diels-Alder-Reaktion mit einem Dienophil reagieren kann, das folgende Schritte umfasst:
- eine anionische Polymerisation mindestens eines Dienmonomers in Gegenwart eines ein Alkalimetall enthaltenden Polymerisationsinitiators,
- die Modifikation des im vorhergehenden Schritt erhaltenen lebenden Polymers durch eine siliciumorganische Verbindung, die mindestens eine substituierte oder unsubstituierte Anthracenylgruppe und mindestens eine Funktion trägt, die gegenüber dem Kettenende des lebenden Polymers reaktiv ist.

2. Verfahren zur Synthese eines modifizierten Dienpolymers nach Anspruch 1, **dadurch gekennzeichnet, dass** der Polymerisationsinitiator difunktionell ist.

3. Verfahren zur Synthese eines modifizierten Dienpolymers nach Anspruch 1 oder 2, **dadurch gekennzeichnet, dass** die siliciumorganische Verbindung durch eine der folgenden Formeln (III) oder (IV) dargestellt ist: 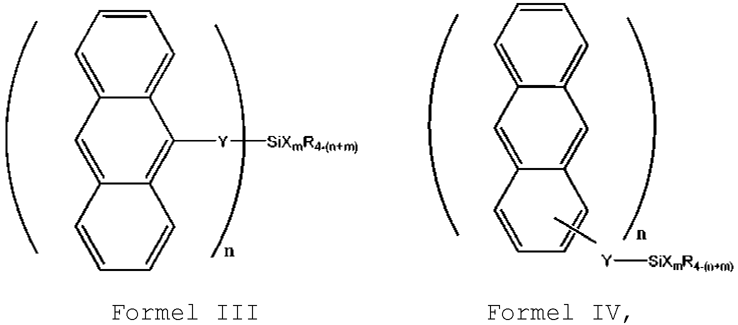 wobei:
- X eine Funktion bezeichnet, die gegenüber dem Kettenende des lebenden Polymers reaktiv ist;
- Y eine Abstandshaltergruppe darstellt, nämlich eine zweiwertige Kohlenwasserstoffkette, die durch ein oder mehrere Heteroatome substituiert oder unterbrochen sein kann;
- R einen einwertigen Kohlenwasserstoffrest darstellt, der durch ein oder mehrere Heteroatome substituiert oder unterbrochen sein kann,
- n eine ganze Zahl von 1 bis 3 ist und m eine ganze Zahl von 1 bis 3 ist, wobei (n+m) eine ganze Zahl von 2 bis 4 ist.

4. Verfahren zur Synthese eines modifizierten Dienpolymers nach Anspruch 3, **dadurch gekennzeichnet, dass** mindestens eine, mindestens zwei, mindestens drei, mindestens vier oder alle fünf der folgenden Bedingungen erfüllt ist bzw. sind:
- die siliciumorganische Verbindung entspricht der Formel (III),
- X ist ein Halogen, vorzugsweise ein Chloratom,
- Y ist eine Ethan-1,2-diyl- oder Propan-1,3-diyl-Gruppe,
- n und m betragen jeweils 1 und
- R ist ein Methyl- oder Ethylrest.

5. Verfahren zur Synthese eines modifizierten Dienpolymers nach einem der Ansprüche 1 bis 4, **dadurch gekennzeichnet, dass** das Stoffmengenverhältnis von der siliciumorganischen Verbindung zum Metall des Polymerisationsinitiators einen Wert größer als 1 aufweist.

6. Modifiziertes Dienpolymer, das in seinem Rückgrat mindestens ein Siliciumatom umfasst, das mindestens eine substituierte oder unsubstituierte Anthracenylgruppe trägt, wobei das Siliciumatom weiterhin durch eine, zwei oder drei Polymerketten substituiert ist.

7. Modifiziertes Dienpolymer nach Anspruch 6, **dadurch gekennzeichnet, dass** das Polymer linear ist und an jedem seiner zwei Kettenenden ein Siliciumatom umfasst, das mindestens eine substituierte oder unsubstituierte Anthracenylgruppe trägt.

8. Modifiziertes Dienpolymer nach Anspruch 6 oder 7, **dadurch gekennzeichnet, dass** das modifizierte Dienpolymer durch die folgende Formel (VI) dargestellt sein kann:
[(B-Y')ₙSi(X)ₚ(R)₄₋ₚ₋ₙ₋ₒ(E)ₒ]ᵢ-Z Formel VI,
wobei
- E ein Dienpolymer bezeichnet,
- Z ein ein- oder mehrwertiger Rest ist, der vom Initiator stammt,
- i eine ganze Zahl ist, die gleich der Funktionalität des Initiators ist, wobei sie von 1 bis 12 beträgt,
- Y' eine kovalente Bindung oder eine Abstandshaltergruppe ist, die B mit den Dienpolymer E verbindet,
- X eine teilweise hydrolysierte, vollständig oder nicht hydrolysierte Restfunktion ist, die ein Halogen oder einen Alkoxyrest bezeichnet,
- R eine einwertige Kohlenwasserstoffgruppe darstellt, die durch ein oder mehrere Heteroatome substituiert oder unterbrochen sein kann,
- B eine Anthracenylgruppe der Formel (I) oder (II) ist, wobei das Symbol * eine Bindung zu Y' bezeichnet, 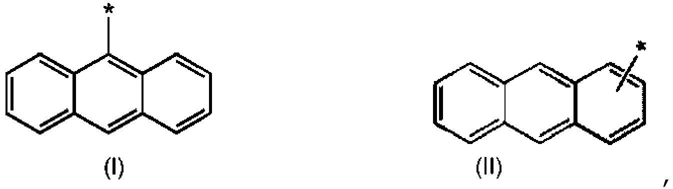
- n eine ganze Zahl von 1 bis 3 ist, o eine ganze Zahl von 1 bis 3 ist, p eine ganze Zahl von 0 bis 2 ist, wobei n+o+p von 2 bis 4 beträgt.

9. Modifiziertes Dienpolymer nach einem der Ansprüche 6 bis 8, **dadurch gekennzeichnet, dass** mindestens eine, insbesondere mindestens zwei, mindestens drei, mindestens vier oder alle der folgenden Bedingungen erfüllt ist bzw. sind:
• die Dienmonomereinheiten des modifizierten Dienpolymers stammen von 1,3-Butadien,
• das modifizierte Dienpolymer ist linear,
• das Dienpolymer umfasst an jedem seiner Kettenenden ein Siliciumatom, das eine substituierte oder unsubstituierte Anthracenylgruppe trägt,
• die Anthracenylgruppe(n) ist (sind) über das Kohlenstoffatom an der Polymerkette gebunden, das nach der IUPAC-Bezeichnung als 9 bezeichnet wird,
• die Anthracenylgruppe ist über eine Ethan-1,2-diyl- oder Propan-1,3-diyl-Gruppe am Siliciumatom gebunden.

10. Modifiziertes Dienpolymer nach einem der Ansprüche 6 bis 9, **dadurch gekennzeichnet, dass** es durch die Formel (VII) dargestellt ist, in der:
- E ein Dienpolymer bezeichnet und
- R1 eine einwertige Kohlenwasserstoffgruppe ist, die durch ein oder mehrere Heteroatome substituiert oder unterbrochen sein kann,

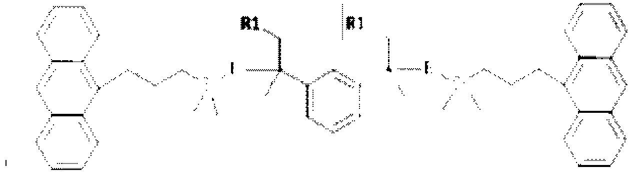

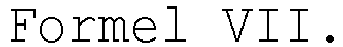

11. Netzwerk aus der thermoreversiblen Vernetzung eines durch mindestens eine Anthracenylgruppe modifizierten Dienpolymers gemäß der Definition in einem der Ansprüche 6 bis 10 oder das gemäß dem in einem der Ansprüche 1 bis 5 beschriebenen Verfahren erhalten wird, mit einem polyfunktionellen dienophilen Vernetzungsmittel.

12. Kautschukzusammensetzung auf der Basis eines modifizierten Dienpolymers gemäß der Definition in einem der Ansprüche 6 bis 10 oder das gemäß dem in einem der Ansprüche 1 bis 5 beschriebenen Verfahren erhalten wird, und eines Vernetzungssystems, das ein polyfunktionelles Dienophil umfasst.

13. Kautschukzusammensetzung nach Anspruch 12, **dadurch gekennzeichnet, dass** die polyfunktionelle dienophile Verbindung ein substituiertes oder unsubstituiertes Polymaleimid ist.

14. Reifen, der eine Kautschukzusammensetzung gemäß der Definition in einem der Ansprüche 12 und 13 umfasst.

## Claims

1. Process for the synthesis of a modified diene polymer comprising at least one anthracenyl group borne by a silicon atom located in the backbone of the polymer and capable of reacting with a dienophile by a Diels-Alder reaction, comprising the stages:
- anionic polymerization of at least one diene monomer in the presence of a polymerization initiator containing an alkali metal,
- modification of the living polymer obtained in the preceding stage by an organosilicon compound bearing at least one substituted or unsubstituted anthracenyl group and at least one function which is reactive with regard to the chain end of the living polymer.

2. Process for the synthesis of a modified diene polymer according to Claim 1, **characterized in that** the polymerization initiator is difunctional.

3. Process for the synthesis of a modified diene polymer according to Claim 1 or 2, **characterized in that** the organosilicon compound is represented by one of the following formulae (III) or (IV): 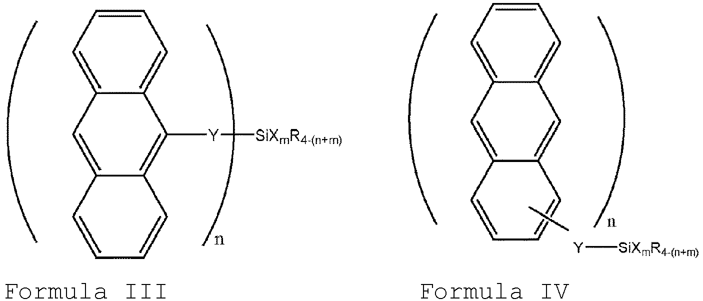 in which:
- X denotes a function reactive with regard to the chain end of the living polymer;
- Y represents a spacer group, i.e. a divalent hydrocarbon chain which can be substituted or interrupted by one or more heteroatoms;
- R represents a monovalent hydrocarbon radical which can be substituted or interrupted by one or more heteroatoms;
- n is an integer ranging from 1 to 3 and m is an integer ranging from 1 to 3, with (n+m) being an integer ranging from 2 to 4.

4. Process for the synthesis of a modified diene polymer according to Claim 3, **characterized in that** one at least of the following conditions is met, two at least, three at least, at least four or the five:
- the organosilicon compound corresponds to the formula (III),
- X is a halogen, preferably a chlorine atom,
- Y is an ethane-1,2-diyl or propane-1,3-diyl group,
- n and m each have the value 1 and
- R is a methyl or ethyl radical.

5. Process for the synthesis of a modified diene polymer according to any one of Claims 1 to 4, **characterized in that** the molar ratio of the organosilicon compound to the metal of the polymerization initiator has a value of greater than 1.

6. Modified diene polymer comprising, in its backbone, at least one silicon atom bearing at least one substituted or unsubstituted anthracenyl group, the silicon atom being additionally substituted by one, two or three polymer chains.

7. Modified diene polymer according to Claim 6, **characterized in that** the polymer is linear and comprises, at each of its two chain ends, a silicon atom bearing at least one substituted or unsubstituted anthracenyl group.

8. Modified diene polymer according to Claim 6 or 7, **characterized in that** the modified diene polymer can be represented by the following formula (VI):
[(B-Y')ₙSi(X)ₚ(R)₄₋ₚ₋ₙ₋ₒ(E)ₒ]ᵢ-Z Formula VI
where
- E denotes a diene polymer,
- Z is a mono- or polyvalent radical which results from the initiator,
- i is an integer equal to the functionality of the initiator ranging from 1 to 12,
- Y' is a covalent bond or a spacer group connecting B to the diene polymer E,
- X is a partially hydrolysed, completely hydrolysed or non-hydrolysed residual function denoting a halogen or alkoxy radical,
- R is a monovalent hydrocarbon group which can be substituted or interrupted by one or more heteroatoms,
- B is an anthracenyl group of formula (I) or (II) in which the symbol * represents a joining to Y', 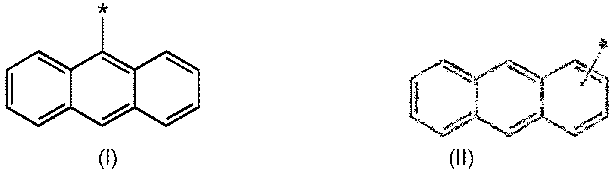
- n is an integer ranging from 1 to 3, o is an integer ranging from 1 to 3 and p is an integer ranging from 0 to 2, with n+o+p ranging from 2 to 4.

9. Modified diene polymer according to any one of Claims 6 to 8, **characterized in that** one at least of the following conditions is met, in particular at least two, at least three, at least four or all:
• the diene monomer units of the modified diene polymer result from 1,3-butadiene,
• the modified diene polymer is linear,
• the diene polymer comprises, at each of its chain ends, a silicon atom bearing a substituted or unsubstituted anthracenyl group,
• the anthracenyl group(s) are connected to the polymer chain by the carbon atom denoted 9 according to the IUPAC notation,
• the anthracenyl group is connected to the silicon atom by an ethane-1,2-diyl or propane-1,3-diyl group.

10. Modified diene polymer according to any one of Claims 6 to 9, **characterized in that** it is represented by the formula (VII) in which:
- E denotes a diene polymer, and
- R1 is a monovalent hydrocarbon group which can be substituted or interrupted by one or more heteroatoms.

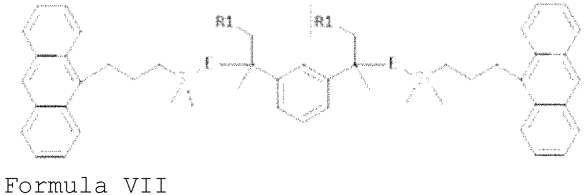

11. Network resulting from the thermoreversible crosslinking of a diene polymer modified by at least one anthracenyl group as defined in any one of Claims 6 to 10 or obtained according to the process described in any one of Claims 1 to 5 with a polyfunctional dienophilic crosslinking agent.

12. Rubber composition based on a modified diene polymer defined in Claims 6 to 10 or obtained according to the process described in any one of Claims 1 to 5 and on a crosslinking system comprising a polyfunctional dienophile.

13. Rubber composition according to Claim 12, **characterized in that** the polyfunctional dienophilic compound is a substituted or unsubstituted polymaleimide.

14. Tyre comprising a rubber composition defined according to either of Claims 12 and 13.
